# EUROPEAN PATENT APPLICATION

(11) **EP 2 280 345 A1**
(43) Date of publication of application: **02.02.2011**
(21) Application number: 09165929.2
(22) Date of filing: 20.07.2009
(51) Int. Cl.: G06F 9/48

(54) **A device for and a method of managing computer tasks**

(71) Applicant: NXP B.V., 5656 AG Eindhoven (NL)
(72) Inventor: Hartmann, Herman, 5656 AE, Eindhoven (NL); Steffens, Elisabeth Francisca Maria, 5656 AE, Eindhoven (NL); Trew, Timothy Ian Paterson, 5656 AE, Eindhoven (NL)
(74) Representative: Krott, Michel

(57) **Abstract**

A device (100) for managing execution of a plurality of processing tasks by a processing resource (102), wherein the device (100) comprises a receiving unit (104) adapted for receiving a user input indicative of the plurality of processing tasks invoked by a user, and a scheduling unit (106) adapted for scheduling a defined order according to which the received plurality of processing tasks are to be executed one after the other by the processing resource (102) to prevent interruption of execution of each of the plurality of processing tasks before completion of the respective one of the plurality of processing tasks.

## Description

### FIELD OF THE INVENTION

The invention relates to a device for managing execution of a plurality of processing tasks by a processing resource.

Beyond this, the invention relates to a method of managing execution of a plurality of processing tasks by a processing resource.

Moreover, the invention relates to a program element.

Furthermore, the invention relates to a computer-readable medium.

### BACKGROUND OF THE INVENTION

Multitasking, i.e. the management of multiple processing tasks, is an important requirement of many processing devices such as computers and handheld devices.

Scheduling is a key concept in computer multitasking and multiprocessing operating system design, and in real-time operating system design. It refers to the way processes are assigned priorities in a priority queue. This assignment is carried out by a scheduler which may be, for instance, implemented in software.

A scheduler may be concerned with:
- CPU utilization - to keep the CPU as busy as possible.
- Throughput - number of processes that complete their execution per time unit.
- Turnaround - amount of time to execute a particular process.
- Waiting time - amount of time a process has been waiting in the ready queue.
- Response time - amount of time it takes from when a request was submitted until the first response is produced.

In real-time environments, such as mobile devices for automatic control in industry (for example robotics), the scheduler should ensure that processes can meet deadlines; this is required for keeping the system stable. Scheduled tasks are sent to mobile devices and managed through an administrative back end.

Operating systems may feature up to three distinct types of schedulers: a long-term scheduler (also known as an admission scheduler or high-level), a mid-term or medium-term scheduler and a short-term scheduler (also known as a dispatcher).

The long-term, or admission, scheduler decides which jobs or processes are to be admitted to the ready queue; that is, when an attempt is made to execute a program, its admission to the set of currently executing processes is either authorized or delayed by the long-term scheduler. Typically for a desktop computer, there is no long-term scheduler as such, and processes are admitted to the system automatically.

A mid-term scheduler, present in systems with virtual memory, temporarily removes processes from main memory and places them on secondary memory (such as a disk drive) or vice versa. This is commonly referred to as "swapping out" or "swapping in". The mid-term scheduler may decide to swap out a process which has not been active for some time, or a process which has a low priority, or a process which is page faulting frequently, or a process which is taking up a large amount of memory in order to free up main memory for other processes, swapping the process back in later when more memory is available, or when the process has been unblocked and is no longer waiting for a resource.

The short-term scheduler (also known as the dispatcher) decides which of the ready, in-memory processes are to be executed (allocated a CPU) next following a clock interrupt, an IO interrupt, an operating system call or another form of signal. This scheduler can be pre-emptive, implying that it is capable of forcibly removing processes from a CPU when it decides to allocate that CPU to another process, or non-pre-emptive, in which case the scheduler is unable to force processes off the CPU.

There are many types of scheduling algorithms, such as Rate-monotonic scheduling (RMS), Round-robin scheduling (RR), Weighted round robin (WRR) etc.

However, the simultaneous management of a plurality of processing tasks may result in a large processing time. Many scheduling mechanisms are based on task prioritization and deadlines of tasks. Interactive tasks are usually given higher priority then non-interactive tasks. However, this involves pre-emption.

### OBJECT AND SUMMARY OF THE INVENTION

It is an object of the invention to manage a plurality of processing tasks in an efficient manner.

In order to achieve the object defined above, a device for managing execution of a plurality of processing tasks by a processing resource, a method of managing execution of a plurality of processing tasks by a processing resource, a program element and a computer-readable medium according to the independent claims are provided.

According to an exemplary embodiment of the invention, a device for managing execution of a plurality of processing tasks by a processing resource is provided, wherein the device comprises a receiving unit adapted for receiving a user input indicative of the plurality of processing tasks invoked by a user, and a scheduling unit (particularly for mid-term scheduling) adapted for scheduling a defined order (or for defining a schedule order) according to which the received plurality of processing tasks are to be executed one after the other by the processing resource to prevent interruption of execution of each of the plurality of processing tasks before completion of the respective one of the plurality of processing tasks (i.e. to avoid switching between processing tasks for activating one and deactivating another one of the processing tasks before execution of a processing task has been finalized).

According to another exemplary embodiment of the invention, a method of managing execution of a plurality of processing tasks by a processing resource is provided, wherein the method comprises receiving a user input indicative of the plurality of processing tasks invoked by a user, and scheduling a defined order according to which the received plurality of processing tasks are to be executed one after the other by the processing resource in a manner to prevent interruption of execution of each of the plurality of processing tasks before completion of the respective one of the plurality of processing tasks.

According to still another exemplary embodiment of the invention, a program element (for instance a software routine, in source code or in executable code) is provided, which, when being executed by a processor, is adapted to control or carry out a processing management method having the above mentioned features.

According to yet another exemplary embodiment of the invention, a computer-readable medium (for instance a CD, a DVD, a USB stick, a floppy disk or a harddisk) is provided, in which a computer program is stored which, when being executed by a processor, is adapted to control or carry out a processing management method having the above mentioned features.

Data processing for processing management purposes which may be performed according to embodiments of the invention can be realized by a computer program, that is by software, or by using one or more special electronic optimization circuits, that is in hardware, or in hybrid form, that is by means of software components and hardware components.

The term "processing tasks" may particularly denote processes to be executed on a computing device using processing resources such as a processor. Such processing tasks or processes may relate to the execution of computer programs or other computing jobs, including the usage of a memory device, for example for data backup. Processing tasks, in the context of this description can be considered as used-defined jobs to be done by a processor during or after powering up (or starting up) a device.

The term "processing resource" may particularly denote one or more processors being physical entities each capable of executing one or more processing tasks. The computational burden related to the execution of one or more processing tasks may be distributed over one or more of the processors which in their entirety may form the processing resource. The processing capacity of the processing resource may be allocated or managed by the scheduling unit.

The term "execution" may particularly denote that the corresponding processing task is actually carried out, i.e. that a sequence of instructions or actions is performed.

The term "scheduling" may particularly denote managing a chronological order according to which a number of processing tasks is actually executed, for instance defining a sequence according to which (or points in time at which) the execution of a dedicated processing task is started.

The term "defined order" may particularly denote that the order is estimated in accordance with one or more criteria, and after having applied this or these criteria the order may be maintained regardless of contrary instructions.

The term "executed one after the other" may particularly denote a sequential or consecutive execution of these processing tasks. In an embodiment, no interruption of the execution of a processing task may be allowed by the system.

The term "user input" may particularly denote an input action of a user, i.e. a human being, specifying processing tasks which a user intentionally wishes to be carried out by processing resources of a system. Such a user input may be performed via a user interface such as a keyboard, a computer mouse, a trackball, a touch screen, or a voice recognition system.

The term "invoked by a user" may particularly denote that a processing task has been started by a user by inputting a corresponding command to a device. Such a command may be input by a user in an operation state of the device in which the device is fully operable, for instance in an operation state of the device in which the device is readily powered up. The execution of the tasks invoked by the user may be performed during the same session, i.e. during a period during which the device remains continuously powered-up, or in one or more subsequent sessions, for instance during one or more start-up procedures of the device.

According to an exemplary embodiment of the invention, a user may freely define a number of processing tasks to be executed. The simple but very efficient management architecture according to an embodiment of the invention includes that these user-defined and user-initiated processing tasks are executed interruption-free and independently from one another, i.e. one after the other. In an embodiment, none of these user-invoked processing tasks is to be interrupted in favour of an other one of these user-invoked processing tasks before this individual processing task is completed. This may prevent an undesired swapping or switching between several tasks before completion of individual ones of the tasks. Consequently, repeated restoring of data and/or rescheduling which conventionally reduces the entire speed of execution of the processing tasks may thereby be prevented. The simple architecture provided by embodiments of the invention has turned out to be significantly more efficient than complex conventional scheduling architectures intermixing the execution of multiple tasks and introducing complex interdependencies. Such advantages may be particularly obtained when restricting the interruption-free scheduling scheme according to an exemplary embodiment selectively to user-invoked tasks. In other words, an embodiment may restrict this interruption-free scheduling scheme exclusively to user-invoked tasks which may or may not be initiated by a user without an interaction with other non-user-invoked tasks. Taking this measure may combine a fast execution of the user-invoked tasks with a stable operation of the entire computing system, since system-invoked tasks (which may depend on one another) may remain undisturbed.

A gist of exemplary embodiments of the invention is to avoid pre-emption when executing tasks simultaneously. For instance, this may be achieved by applying a scheduling criteria which is based on a start-up sequence and not necessarily based on user interaction. However, this may also be achieved by applying a criteria which is based on user-interaction and is not necessarily specifically related to start-up.

In the following, further exemplary embodiments of the device will be described. However, these embodiments also apply to the method, to the program element and to the computer-readable medium.

The scheduling unit may be adapted for scheduling the defined order so that a succeeding one of the plurality of processing tasks may be executed only after completion of a preceding one of the plurality of processing tasks. In such an embodiment, any overlap of time during which both the preceding processing task and the succeeding processing task are executed may be prevented. Such an overlap may result in a delay due to swapping and may therefore be suppressed. Such an embodiment relates to a pure sequential processing scheme.

In another embodiment, the scheduling unit may be adapted for scheduling the defined order so that a subsequent one of the plurality of processing tasks can be already started to be executed before full completion of a succeeding one of the plurality of processing tasks, however upon determining that an actual level of occupation of the processing resource has fallen below a critical threshold of occupation of the processing resource. Therefore, the general rule maintains that there is no competition allowed between different simultaneously executed processing tasks. However, if a processing task is presently executed and the system determines that the execution of this task does not require the entire processing resource, the remaining processing source which is not used for this processing task may be used for already starting a subsequent task. This may result in the parallel or simultaneous execution of two or more tasks, provided that the processing resources are sufficient for such a simultaneous execution. However, the defined order according to which the received processing tasks are to be executed will still be maintained in such an embodiment so that undesired swapping may be efficiently suppressed. Hence, also in this embodiment, a "first come first served" ordering scheme for executing multiple tasks may be maintained.

In an embodiment, the scheduling unit may be adapted for consistently prohibiting a swapping of the execution of the plurality of processing tasks so as to maintain the defined order regardless of a pre-emption of at least one of the plurality of processing tasks. Therefore, it may be prevented that due to a competition of different processing tasks a switching or swapping of an execution characteristic results. Even if the individual processing tasks include an indicator regarding a specific priority of the specific task, such a priorization may be disregarded according to the described embodiment, so that no processing time has to be spent for deciding whether a swapping might be advantageous, which swapping may in fact results in an additional consumption of processing and/or memory resources.

In an embodiment, the device may comprise a task list unit adapted for listing the plurality of processing tasks in a way being indicative of the order of execution. The task list unit may be adapted to be accessible by the scheduling unit for providing an identifier of a respective one of the plurality of processing tasks to be executed next by the scheduling unit in response to a corresponding request of the scheduling unit. In other words, the scheduling unit may access the task list unit which may be a database or may be part of a memory. This list may include a ranking or may define a succession indicative of the order of executing the various processing tasks. By using such a task list as a lookup table, the scheduling unit may determine easily and with low computational burden which processing task is to be executed next. Hence, the scheduling unit may request information of the task list unit which of the remaining processing tasks to be executed will be the next one. In response to such a request, the lookup table of the task list unit may be queried and a communication message may be sent from the task list unit back to the scheduling unit being indicative of the identity of the next processing task to be executed.

Still referring to the previously described embodiment, the scheduling unit may be adapted for requesting the identifier of one of the plurality of processing tasks to be executed next upon receipt of a notification from the processing resource that a preceding one of the plurality of processing tasks has been completed. In other words, completion of a preceding processing task may be reported from the processing task to the scheduling unit which, in turn, can use this as a trigger for retrieving a next processing task to be executed from the task list unit.

The defined order used by the scheduling unit may be a chronological order according to which the plurality of processing tasks have been invoked by the user. In other words, if a user has invoked at a first point of time a first processing task and at a second point of time after the first point of time a second processing task and at a third point of time after the second point of time a third processing task, and so on, then the defined order is simply a fingerprint of this chronology of invoking. Hence, the scheduling unit will first execute the first processing task, then the second processing task, then the third processing task and so on. This is a simple scheme which can be worked off with low computational burden resulting in a fast operation of the system.

In an embodiment, the defined order may be an unalterably fixed order. Therefore, in such an embodiment, the system may disregard any command or instruction, for instance from a user or from any one of the processing tasks or of a control entity to change an order. Therefore, maintaining the once decided strategy of executing the processing tasks may allow to prevent undesired computational efforts for rescheduling which may result in a delay in the queue of processing tasks.

In an alternative embodiment, the defined order may be an order being definable by the user. Therefore, the user may define in advance rules according to which the order will be determined. Therefore, user preferences may be respected when defining the order. Alternatively, the system may give a user the opportunity to define the order. For example, when the system determines that a long waiting time would be required for executing a specific processing task presently invoked by a user, then the user may be informed that such a delay is to be expected. The user may then change the order, for instance may control the system to firstly execute a specific processing task which is of greatest importance for the user. This allows for a great degree of flexibility and at the same time a fast execution of the processing tasks. However, also in this embodiment, the interruption of a presently executed processing task may be prevented.

In an embodiment, the defined order may be defined based on a priority level assigned to corresponding ones of the plurality of processing tasks so that a processing task having a higher priority level is to be executed prior to a processing task having a lower priority level. Therefore, each of the processing tasks may have an assigned priority value. The system may then sort the plurality of processing tasks in accordance with the respective priority levels so that the processing task with the highest level of priority will be executed first, next the processing task with the second highest priority level, and so on. At the end, the processing task with the lowest priority value will be executed. However, also in this embodiment, the interruption of a presently executed processing task may be prevented.

In an embodiment, the device may comprise a classification unit adapted for classifying each of the plurality of processing tasks as an interactive processing task requiring interaction of the user during execution or as a non-interactive processing task not requiring interaction of the user during execution. Interactive processing tasks may thus, in contrast to non-interactive processing tasks, require actions of the user during the execution, for instance input of data required for continuing the execution of a respective task. The scheduling unit may be adapted for scheduling the defined order selectively for processing tasks classified as non-interactive processing tasks and not for processing tasks classified as interactive processing tasks. Therefore, the defined order may only apply to tasks which do not require user interaction, since this would require the user to wait until all the tasks are finished because it could be that one of the tasks will require user interaction. In an embodiment, only tasks which are invoked by the user and which do not require further contributions from the user may be executed in accordance with the defined order.

For interactive processing tasks and/or for processing tasks which are system invoked and not user-invoked, a conventional way of processing may be implemented. Such a conventional way may include temporarily removing processes from a main memory and placing them on a secondary memory or vice versa ("swapping out" or "swapping in"). For interactive processing tasks and/or for processing tasks which are system invoked and not user-invoked, the scheduler may decide to swap out a process which has not been active for some time, or a process which has a low priority, or a process which is page faulting frequently, or a process which is taking up a large amount of memory in order to free up main memory for other processes, swapping the process back in later when more memory is available, or when the process has been unblocked and is no longer waiting for a resource. One or more of these and/or other criteria may be applied for interactive processing tasks and/or for processing tasks which are system invoked and not user-invoked.

Still referring to the previously described embodiment, the classification unit may be adapted for classifying at least one of the plurality of processing tasks as a mixed processing task having an interactive part and having a non-interactive part. In such an embodiment, the scheduling unit may be adapted for scheduling the defined order also for processing tasks classified as mixed processing tasks. More specifically, the scheduling unit may be adapted for scheduling the defined order specifically for non-interactive parts of mixed processing tasks and for pure non-interactive processing tasks. This may allow to further refine the efficiency of using processing resources.

The receiving unit, in another embodiment, may be adapted for receiving a plurality of user-defined initialization tasks to be executed upon one or more or all subsequent start-ups of the device as the plurality of processing tasks. The scheduling unit may be adapted for scheduling a defined start-up order as the defined order according to which the plurality of user-defined initialization tasks are to be executed one after the other by the processing resource upon start-up of the device. In other words, a user may define a start list of applications or the like to be automatically started when booting the device. Therefore, processing tasks which have been defined by a user in a start list to be executed upon powering on the device may be executed sequentially and uninterruptedly. The present inventors have surprisingly recognized that this is faster than a parallel execution of several of such tasks involving swapping.

The scheduling unit may be adapted for scheduling the defined start-up order so that each of at least one system-induced task is executed before execution the entire multitude of the plurality of user-defined initialization tasks. Therefore, specific routines which are required by the system to run properly may be executed first upon booting before starting to work off the user defined processing tasks. This may allow to ensure a proper functioning of the system even when the system-defined tasks are required also for properly running the user defined tasks.

In an embodiment, the device may be adapted for managing execution of the plurality of processing tasks by a plurality of independently operating processing resources (such as a plurality of different physical processors each capable to process without depending on another one of the processors). The scheduling unit may then be adapted for scheduling the defined order separately for each of the independently operating processing resources. For instance, swapping may be avoided for each of the independent processors. Hence, multiple processors may be used according to exemplary embodiments of the invention, for instance two, three or four cores. In general, the tasks may be distributed over the several processors in which case not all user-invoked tasks have to be executed sequentially but can be distributed over the processors. A conventional bottleneck is the swapping of data. In cases where the processors have independent memory (primary, secondary and maybe tertiary, e.g. hard disk), they may be executed parallel on these processors. The architecture of an embodiment of the invention however, remains the same, also for multiple processors: It may avoid unwanted/unnecessary pre-emption of tasks and therefore unwanted swapping. Hence, the architecture according to embodiments of the invention still holds for many different architectures of the processing unit.

For instance, the device according to an embodiment of the invention may be realized as one of the group consisting of a computer, a laptop, a personal digital assistant, an electronic organizer, a mobile phone, a hearing aid, a television device, a video recorder, a monitor, a gaming device, an audio player, a DVD player, a CD player, a harddisk-based media player, a radio device, an internet radio device, a public entertainment device, an MP3 player, a car entertainment device, a medical communication system, a body-worn device, a speech communication device, a home cinema system, a home theatre system, a flat television apparatus, an ambiance creation device, a studio recording system, or a music hall system. However, these applications are only exemplary, and other applications in many fields of the art are possible. Specifically, embodiments of the invention may be applied to drive automotive or home applications as well as portable devices. Embodiments of the invention may be implemented in operating systems for computers, e.g. Windows, Apple OS, Linux. etc.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 illustrates a system for managing execution of a plurality of processing tasks by a processing resource according to an exemplary embodiment of the invention.
Fig. 2 illustrates a flow-chart of the separation of tasks according to an exemplary embodiment of the invention in which a fast execution of non-interactive tasks is achieved by avoiding pre-emption through sequential execution.
Fig. 3 relates to the system of Fig. 2 and illustrates a scheme of executing non-interactive tasks.
Fig. 4 illustrates a system according to another exemplary embodiment of the invention in which tasks are split between tasks that are induced by the system and those that are added by the user to enable a faster start-up of central processing unit (CPU) based systems by a sequential execution of tasks that are added by the user.
Fig. 5 relates to the system of Fig. 4 and shows the execution of tasks added by a user.

### DESCRIPTION OF EMBODIMENTS

The illustration in the drawing is schematically. In different drawings, similar or identical elements are provided with the same reference signs.

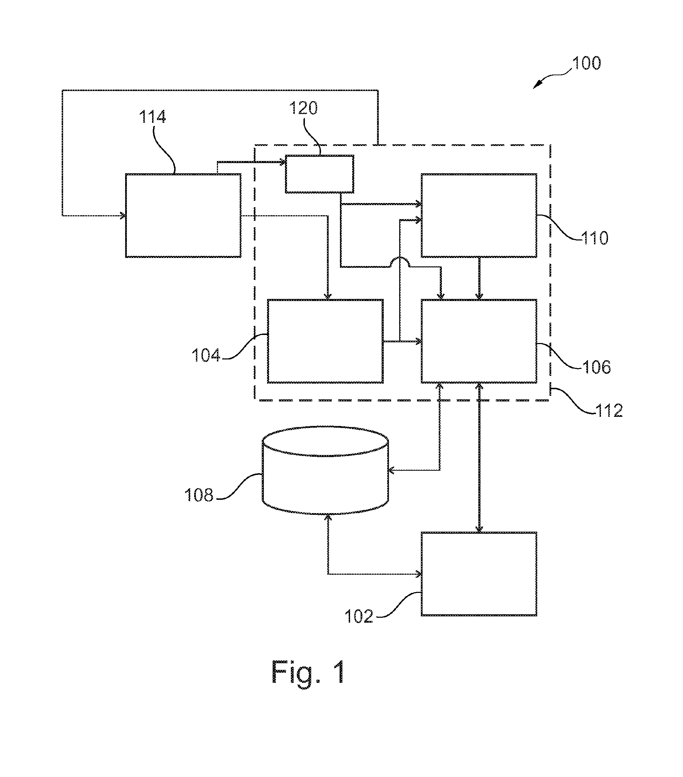

In the following, referring to **Fig. 1****,** a device 100 (such as a personal computer) for managing the execution of a plurality of processing tasks by a processing resource 102 (such as a central processing unit (CPU) or a microprocessor) according to an exemplary embodiment of the invention will be explained.

Fig. 1 shows a user interface 114 via which a user may communicate bidirectionally or unidirectionally with the device 100. The user interface 114 may comprise an input unit such as keyboard, a computer mouse, etc. allowing to input commands and instructions to the device 100. The user interface 114 may also comprise an output unit such as a display or the like allowing the device 100 to present information to the user.

The device 100 may be a laptop, for instance. A microprocessor of the laptop may serve as a processing resource 102, i.e. as an entity capable of running computer programs or the like or performing other kinds of computation or calculation. Furthermore, a data memory 108 may be provided, for instance a semiconductor mass storage device. The processing resource 102 may also have access to the memory 108.

A further processor 112 such as a microprocessor or a central processing unit (CPU) is shown as well. In one embodiment, the processor 112 and the processing resource 102 may form two different parts of one and the same physical processor. In another embodiment, two separate processors may form the processor 112 and the processing resource 102.

In the described embodiment, the user operating the user interface 114 may invoke a plurality of processing tasks to be executed by the processing resource 102. A receiving unit 104 interfacing with or forming part of the processor 112 may receive an input indicative of the plurality of processing tasks invoked by the user. This received information may be forwarded from the receiving unit 104 to a scheduling unit 106 (which may also form part of the processor 112) which is adapted for scheduling a defined order according to which the received plurality of processing tasks are to be executed one after the other by the processing resource 102.

The scheduling unit 106 will schedule according to the defined order to prevent interruption of execution of any one of the plurality of processing tasks before completion of the respective one of the plurality of processing tasks. In an embodiment, a succeeding one of the plurality of processing tasks is executed only after full completion of a preceding one of the plurality of processing tasks. Thus, an interruption or a swapping of the execution of the plurality of processing tasks may be prohibited so as to maintain the defined order regardless of a pre-emption of at least one of the plurality of processing tasks.

Memory 108 may include data in form of a database which may also be denoted as a task list. Such a task list may be adapted for listing the plurality of processing tasks indicative of the order and may be adapted to be accessible by the scheduling unit 106. Therefore, when the scheduling unit requests from the task list unit 108 the information which processing task is to be executed next, a corresponding identifier of the identified processing task is sent back by the scheduling unit 106 so that the scheduling unit 106 can control the processing resource 102 to perform the execution of the dedicated processing tasks next. Such a request may be sent from the scheduling unit 106 to the task list 108 only when the processing resource 102 reports to the scheduling unit 106 that a previous processing task has been completed, so that there is free capacity in the processing resource 102 for a next processing task for execution.

The defined order according to which the user-defined processing tasks are executed by the processing resource 102 may be simply the chronological order according to which a user has input the respective processing tasks via the user interface 114. In the described embodiment, this order is unalterably fixed. By preventing undesired swapping, the system operates in a very fast manner and the capacity of the processing resource 102 is used efficiently.

System 100 also comprises a classification unit 110 which may be adapted for classifying each of the plurality of processing tasks in accordance with one or more predefined classification criteria. Then, the classification unit 110 may report to the scheduling unit 106 which of the user-defined processing tasks may be used for the described ordering architecture, i.e. a sequential interruption-free execution architecture. For example, if some of the processing tasks are interactive processing tasks and others are non-interacting processing tasks, the classification unit 110 may report to the scheduling unit 106 which of the tasks are non-interactive processing tasks which do not require any information to be provided by the user operating the user interface 114. In an embodiment, only these non-interactive processing tasks are used for the sequential execution architecture, so that the information required from the user for the interactive processing tasks may be provided from the user independently of the processing architecture, thereby improving user convenience.

It is also possible that the classification unit 110 classifies some of the processing tasks as mixed processing tasks having an interactive part and a non-interactive part and defining only the non-interactive part of these mixed processing tasks to be integrated in the sequential execution scheme of the scheduling unit 106.

In an embodiment, processing tasks which do not have at least a non-interactive part may be processed using a conventional processing scheme (for instance the above-mentioned "swapping"). This conventional processing scheme may be performed either before or after the defined order scheme, or simultaneously with the defined order scheme using an allocated portion of the processing resource 102.

Furthermore, Fig. 1 shows a start-up unit 120 being also part of the processor 112. The user may define user-defined processing tasks to be executed upon powering up the device 100 in future booting procedures of the device 100.The start-up unit 120 recognizes when a user operating the user interface 114 switches on the device 100, for instance powers on the device 100. Then, a start-up list of processing tasks will be executed under the control of the scheduling unit 106. In this context, the classification unit 110 may classify the processing task to be executed upon powering up the device 100 into system defined and user-defined processing tasks. Upon booting, the system-defined tasks may be executed first, and the user-defined start-up tasks may be executed subsequently in the sequential order as described above.

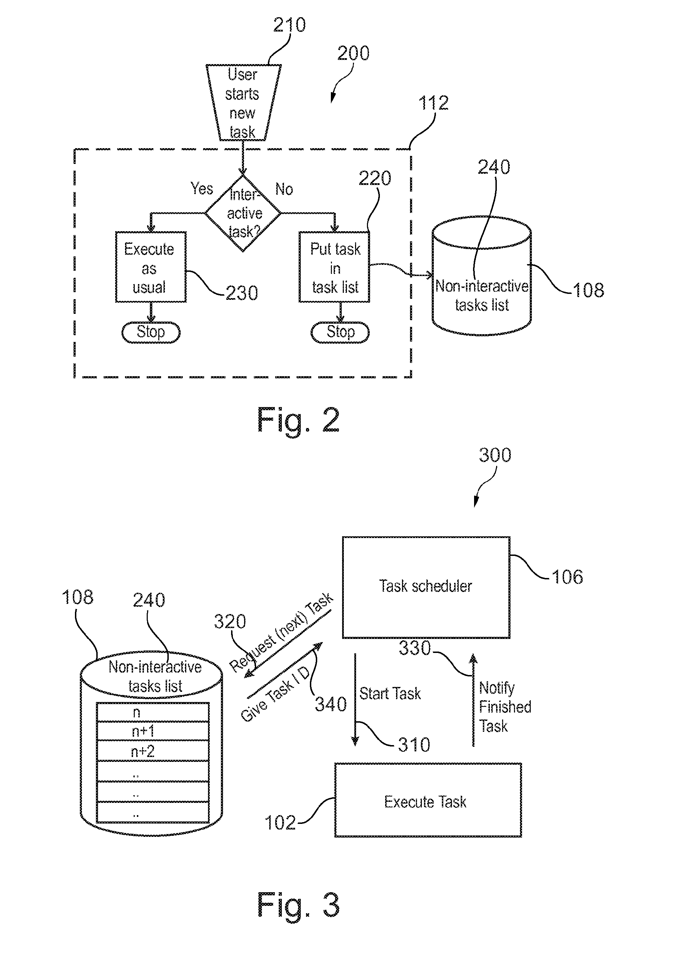

In the following, also referring to Fig. 2 and Fig. 3, a first aspect of the invention will be described.

The first aspect of the invention relates to the faster execution of non-interactive tasks by avoiding pre-emption through sequential execution. This embodiment relates both to real and non-real time applications. However, this embodiment relates to tasks for which there is no fixed deadline. Particularly, it may relate to mid-term scheduling.

In a system, it is possible to distinguish between interactive processes (or tasks) and non-interactive tasks. Interactive tasks may denote that the user is interacting with the system, during the execution of a task, in order to obtain the desired result. Non interactive tasks, on the other hand, may denote tasks for which the user does not need to interact with the system for a proper execution.

Examples of interactive tasks are:
- Browsing on the internet.
- Making a telephone call.
- Creating an email, a short message service (SMS), or create a document.
- Playing a computer game.
- Editing a picture.

Examples of non-interactive tasks are:
- Copying a set of files from one directory to another.
- Sending an email, or synchronisation of emails.
- Copying a CD

For some of the non-interactive tasks, the user may be notified when it is finished, or when the execution has failed. This still remains non-interactive since the user does not need to interact for the proper execution.

The described embodiment does not relate to tasks that are usually executed by Batch Processing. In contrast to this the embodiment relates to tasks that are invoked by the user. Tasks that, typically, take a few seconds or minutes to execute.

Although hardware is becoming faster all the time, the user is demanding more and more of the system. This has the consequence that systems are responding slower then expected by the user. Furthermore, resource demanding functionality is added to mobile devices that have very limited resources.

Part of the increasing user demand is caused by a simultaneous execution of tasks. At the same time, the user wants the system to perform several tasks. This is supported by schedulers, but on the other hand may cause a lower performance.

The described embodiment of the invention describes a method to reduce pre-emption of tasks and thereby avoiding swapping out and swapping in. This may be done by classifying tasks as non-interactive tasks or as interactive tasks. Interactive tasks may be scheduled as usual (for instance using swapping). Non-interactive tasks are executed (as run to completion) in a sequential order, based on the order in which they have been invoked by the user.

In general, executing tasks sequentially may lead to problems because tasks could depend on other tasks. The tasks started by a user, are independent, since they could or could-not have been started and the system would work consistently independent from that.

To illustrate the benefits from this embodiment, a test has been executed by the present inventors using Microsoft Windows: two directories are copied from the hard disk of a laptop to a USB stick. The USB stick has a size of one Gigabyte and the two directories contain Jpeg pictures and AVI movies. The two directories are respectively 614 MB and 160 MB.

In situation 1, the two directories are copied by the user one by one. One directory is selected and dragged onto the USB stick. Directly after that, the second directory is copied in the same way. The system starts-up two simultaneous tasks. The total time estimated is 87 minutes for one directory and 82 minutes for the other. The maximum of this is 87 minutes. In situation 2, the two directories are copied simultaneously. The two directories are selected together and dragged onto the USB stick. The system starts-up one task, but the directories are copied one by one, in a sequential order. It describes that the total time estimated is 26 minutes, about three times as fast.

The actual measurement and other experiments showed that in similar cases the sequential execution (in one task) may be two to three times faster then simultaneous execution with two separate tasks. This advantage becomes even bigger (a lot actually), when more then two tasks are executed.
**Fig. 2** shows a flow-chart diagram 200 in accordance with an embodiment of the invention in which only non-interactive processing tasks are ordered chronologically for correspondingly executing them chronologically, whereas interactive tasks are executed conventionally (for instance using a "swapping" scheme as mentioned above). When a task is started by the user (see block 210), the system either puts the task in a separate list (see block 220) which is denoted as non-interactive tasks list 240 or executes it as usual (see block 230), for instance performs swapping as described above. This choice is based on the characterization that belongs to the tasks.
**Fig. 3** shows a scheme 300 of a scheduling architecture which can be used to operate in accordance with Fig. 2.

As can be taken from Fig. 3, the task list 240 is used by scheduler 106 that executes the tasks one-by-one (see reference numeral 310). The scheduler 106 requests for a task from the non interactive tasks list 240 (see reference numeral 320). When the task is run to completion, a notification is send to the scheduler 106 (see reference numeral 330). Then the scheduler 106 requests (see reference numeral 320) the next task from the list 240, receives a corresponding task identifier (see reference numeral 340) and starts the execution of this new task (see reference numeral 310).

With this embodiment, further improvement may be optionally achieved by taking one or more of the following measures:
- Some tasks may have an interactive part and a non-interactive part. Selectively the non-interactive part may be separated to be executed sequentially.
- The next task in the list 240 may be executed when the needed resources are not critical anymore. In such an embodiment, it may be advantageous that the resource utilisation is estimated in advance.
- An advantageous implementation is when the non-interactive task list 240 is executed as a First-In-First-Out queue (FIFO). That is, each task is executed in the order in which it has been started by the user. A further improvement may be to include task priority additionally. The tasks with lower priority may then be put lower on the list, i.e. they will be started later.

When the time to execute the task list 240 is getting longer, the user may be notified when invoking a new task. The user may then be given the choice to give a priority to the task, thus putting it higher on the list. This gives a higher control to the user.

The described embodiment causes fast execution and low power consumption, thereby increasing battery life for mobile and portable devices. It also has all additional advantages associated with reduced power, as for example less heat generation and fan-less (thus more silent) operation. Faster processing or start-up may also result in SoCs (System on a Chip) causing a cost-price reduction.

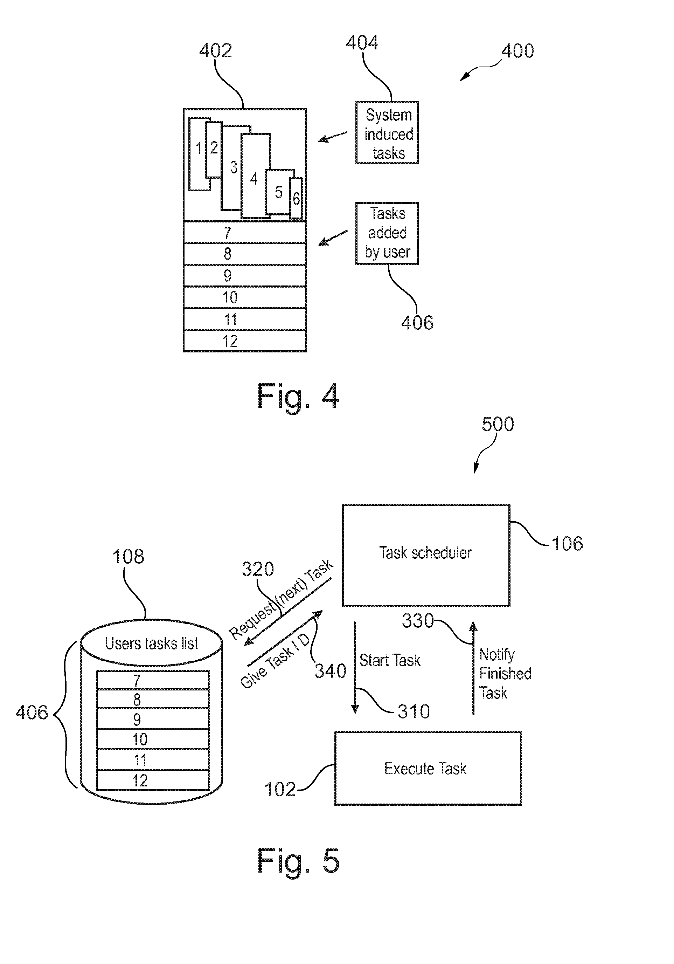

In the following, also referring to Fig. 4 and Fig. 5, a second aspect of the invention will be described.

The second aspect of the invention relates to the faster start-up of CPU-based systems by a sequential execution of tasks that are added by the user.

Faster start-up time is important to allow the user to use the system as fast as possible. Current computer system take longer and longer to start-up. As a reference: Systems in the early 90's, running Microsoft MS-DOS had a much faster start-up time then current Microsoft XP or Vista Systems, despite that the hardware is much faster nowadays. This is caused by all the extra services that are running, by the operating system as well as additions by the user.

The described embodiment, allowing to reduce start-up time, also relates both to real and non-real time applications.

In open systems, functionality may be added by a user. Generally, systems can be characterized as open or closed systems. Closed systems are systems for which the software (mostly referred to as Firmware) is fixed, i.e. the user cannot change the functionality. Examples of such systems are photo cameras, MP3 players and so forth. Open systems are systems to which the user can add or change functionality, such as a personal computer.

More and more systems are becoming open systems, including consumer electronics. For instance, nowadays MP3 players or mobile phones have the option to add games, and functionality like YouTube on your TV, WiFi connections to the audio systems and Bluetooth devices that are connected to a car infotainment system.

Other additions can be additions to the SetTopBox, done by content providers.

During start-up a number of processes have to be started, for instance an operating system, drivers for mouser, keyboards etc. Over time users may add applications themselves to the system start-up, such as printer drivers, virus detection software etc. This causes that start-up time is increasing.

Besides the time needed to execute these tasks, this is also increased by the time needed to switch between the executions of these tasks since the tasks are frequently pre-empted before they are finished. This is caused by the fact these processes are started simultaneously.

In the following, an experiment made by the present inventors will be described: Lotus Notes (email) and Dragon Naturally Speaking (voice recognition software) where added to the Windows XP Startup Menu. This causes that these applications are automatically started up when the computer is started. The total start-up time in this situation became 45 minutes. A lot of swapping to the hard disk was noticed. When only Lotus Notes was added to the startup menu and Dragon Naturally Speaking was started up manually (after Lotus Notes was running) the total time became 15 minutes. Adding Dragon Naturally Speaking to the startup menu and starting Lotus Notes manually, gave approximately the same result, i.e. 15 minutes.

The described embodiment relate to a method to reduce pre-emption of these tasks. This is done by starting-up these processes in a sequential order, based on the order in which they have been added to the system. This leads to a faster execution and less power consumption.

In general, executing tasks sequentially may lead to problems because tasks could depend on other tasks. For an open system however, these additional tasks are independent, since they could or could-not have been added to the system by the user. The system would work in both situations, independent from whether or not these additional tasks would have been added.

**Fig. 4** shows a scheme 400 illustrating a list 402 of system induced tasks 404 and tasks added by a user 406 to be executed when powering up a device such as a computer. As can be taken from the scheme 400, firstly system-induced tasks (1-6) 404 are executed in a manner allowing for a swapping, and then the tasks added by the user 406, for instance in a chronological order. Hence, Fig. 4 shows how tasks are split between tasks that are induced by the system 404 and those that are added by the user 406.

**Fig. 5** shows an architecture similar to that shown in Fig. 3, however for the scheme 400 of Fig. 4.

The tasks that are induced by the system 404 are executed as usual. The tasks that are added by the user 404 are maintained in a list (called the User Tasks List) in the order in which they where added. For instance if "detection of an Ipod" was added before "checking for the availability of a printer", the first one is higher on the list and will therefore be executed before the second one. During start-up the system executes these tasks one by one. The scheduler 106 requests for a task from the User Tasks List, see reference numeral 320 in Fig. 5, and receives the next one from the User Task List (see reference numeral 340). The task assigned to the received task ID is then executed (see reference numeral 310).

When the task is finished, a notification is sent to the scheduler 106 (see reference numeral 330). Then the scheduler 106 requests the next task from the list (see reference numeral 320) and starts the execution of this new task (see reference numeral 310). This will continue until all tasks in the list are executed.

Optionally, one or more of the following further improvements may be included in the described embodiment:
- The execution of the next task in the list may also start earlier, that is before the previous one is finished. For instance when the system notices that there are sufficient resources available to execute them both without significant loss of delay because of pre-emption. For this it may be advantageous that the resource utilisation is known up-front.
- The user may be asked by the system in which order the user wants the tasks to be executed.

Many conventional systems try to define the exact order in which applications have to be started and are based on a known set of application. These systems ignore that applications might be added by the user, in which case the most efficient order cannot be determined.

Other conventional systems that deal with system initialization try to define the exact order in which the tasks have to be started. For open systems this does not work since the tasks are not known during system design because they can be added later by the user.

In contrast to this, the described embodiment causes faster start-up and less power consumption, thereby increasing battery life for mobile and portable devices. It also has all additional advantages associated with reduced power, as for example less heat generation and fan-less (thus more silent) operations. It may also cause a cost-price reduction. In contrast to conventional systems, the implementation of an exact sequence of execution does not have to be defined, which makes the described embodiment of the invention applicable to open systems.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A device (100) for managing execution of a plurality of processing tasks by a processing resource (102), wherein the device (100) comprises
a receiving unit (104) adapted for receiving a user input indicative of the plurality of processing tasks invoked by a user;
a scheduling unit (106) adapted for scheduling a defined order according to which the received plurality of processing tasks are to be executed one after the other by the processing resource (102) to prevent interruption of execution of each of the plurality of processing tasks before completion of the respective one of the plurality of processing tasks.

2. The device (100) according to claim 1, wherein the scheduling unit (106) is adapted for scheduling the defined order so that execution of a succeeding one of the plurality of processing tasks is started only after completion of a preceding one of the plurality of processing tasks.

3. The device (100) according to claim 1, wherein the scheduling unit (106) is adapted for scheduling the defined order so that execution of a subsequent one of the plurality of processing tasks is started before completion of a succeeding one of the plurality of processing tasks upon determining that an actual level of occupation of the processing resource (102) has fallen below a critical threshold of occupation of the processing resource (102).

4. The device (100) according to claim 1, wherein the scheduling unit (106) is adapted for prohibiting swapping of the execution of the plurality of processing tasks so as to maintain the defined order regardless of a pre-emption of at least one of the plurality of processing tasks.

5. The device (100) according to claim 1, comprising a task list unit (108) adapted for listing the plurality of processing tasks in accordance with the defined order, wherein the task list unit (108) is accessible by the scheduling unit (106) for providing an identifier of a respective one of the plurality of processing tasks to be executed next by the scheduling unit (106) in response to a corresponding request of the scheduling unit (106).

6. The device (100) according to claim 5, wherein the scheduling unit (106) is adapted for requesting the identifier of the respective one of the plurality of processing tasks to be executed next upon receipt of a notification from the processing resource (102) that a preceding one of the plurality of processing tasks has been completed.

7. The device (100) according to claim 1, wherein the defined order is one of the group consisting of
an order which corresponds to a chronological order according to which the plurality of processing tasks have been invoked by the user;
an unalterably fixed order;
an order being definable by the user; and
an order defined based on a priority level assigned to corresponding ones of the plurality of processing tasks so that a processing task having a higher priority level is to be executed prior to a processing task having a lower priority level.

8. The device (100) according to claim 1,
comprising a classification unit (110) adapted for classifying each of the plurality of processing tasks as an interactive processing task requiring interaction of the user during execution or as a non-interactive processing task not requiring interaction of the user during execution;
wherein the scheduling unit (106) is adapted for scheduling the defined order selectively for processing tasks classified as non-interactive processing tasks and not for processing tasks classified as interactive processing tasks.

9. The device (100) according to claim 8,
wherein the classification unit (110) is adapted for classifying at least one of the plurality of processing tasks as a mixed processing task have an interactive part and having a non-interactive part;
wherein the scheduling unit (106) is adapted for scheduling the defined order also for non-interactive parts, not for interactive parts of mixed processing tasks.

10. The device (100) according to claim 1,
wherein the receiving unit (104) is adapted for receiving a plurality of user-defined initialization tasks to be executed upon start-up of the device (100) as the plurality of processing tasks;
wherein the scheduling unit (106) is adapted for scheduling a defined start-up order as the defined order according to which the plurality of user-defined initialization tasks are to be executed one after the other by the processing resource (102) upon start-up of the device (100).

11. The device (100) according to claim 10,
wherein the scheduling unit (106) is adapted for scheduling the defined start-up order so that each of at least one system-induced task is to be executed before execution of the plurality of user-defined initialization tasks.

12. The device (100) according to claim 1, adapted for managing execution of the plurality of processing tasks by a plurality of independently operating processing resources (102), wherein the scheduling unit (106) is adapted for scheduling the defined order separately for each of the independently operating processing resources (102).

13. The device (100) according to claim 1, realized as at least one of the group consisting of a computer, a laptop, a personal digital assistant, an electronic organizer, a mobile phone, a hearing aid, a television device, a video recorder, a monitor, a gaming device, a laptop, an audio player, a DVD player, a CD player, a harddisk-based media player, a radio device, an internet radio device, a public entertainment device, an MP3 player, a car entertainment device, a medical communication system, a body-worn device, a speech communication device, a home cinema system, a home theatre system, a flat television apparatus, an ambiance creation device, a studio recording system, and a music hall system.

14. A method of managing execution of a plurality of processing tasks by a processing resource (102), wherein the method comprises
receiving a user input indicative of the plurality of processing tasks invoked by a user;
scheduling a defined order according to which the received plurality of processing tasks are to be executed one after the other by the processing resource (102) to prevent interruption of execution of each of the plurality of processing tasks before completion of the respective one of the plurality of processing tasks.

15. A computer-readable medium, in which a computer program of managing execution of a plurality of processing tasks by a processing resource (102) is stored, which computer program, when being executed by a processor (112), is adapted to carry out or control a method according to claim 14.

16. A program element of managing execution of a plurality of processing tasks by a processing resource (102), which program element, when being executed by a processor (112), is adapted to carry out or control a method according to claim 14.
